# FASCICULE DE BREVET EUROPEEN

(11) **EP 0 711 230 B1**
(45) Date de publication et mention de la délivrance du brevet: **10.12.1997**
(21) Numéro de dépôt: 93917850.5
(22) Date de dépôt: 04.08.1993
(51) Int. Cl.: B60F 3/00

(54) **DISPOSITIF DE PROPULSION NAUTIQUE**
WASSERFAHRZEUGANTRIEBSANLAGE
NAUTICAL PROPULSION DEVICE

(43) Date de publication de la demande: 15.05.1996
(73) Titulaire: Klukowski, Slawomir, F-75018 Paris (FR)
(72) Inventeur: Klukowski, Slawomir, F-75018 Paris (FR)
(74) Mandataire: Lejet, Christian
(86) Numéro de dépôt international: FR9300789
(87) Numéro de publication internationale: WO9504669

(56) Documents cités:
- FR-A- 370 636
- FR-A- 2 247 363
- FR-A- 2 690 385
- US-A- 3 595 199
- US-A- 3 688 731

## Description

La présente invention concerne un dispositif de propulsion nautique pour un véhicule amphibie. Actuellement, les véhicules amphibies sont propulsés dans l'eau soit par des hélices, soit par des hydrojets. Les caractéristiques du préambule de la seule revendication sont connues du document US-A-3 595 199.

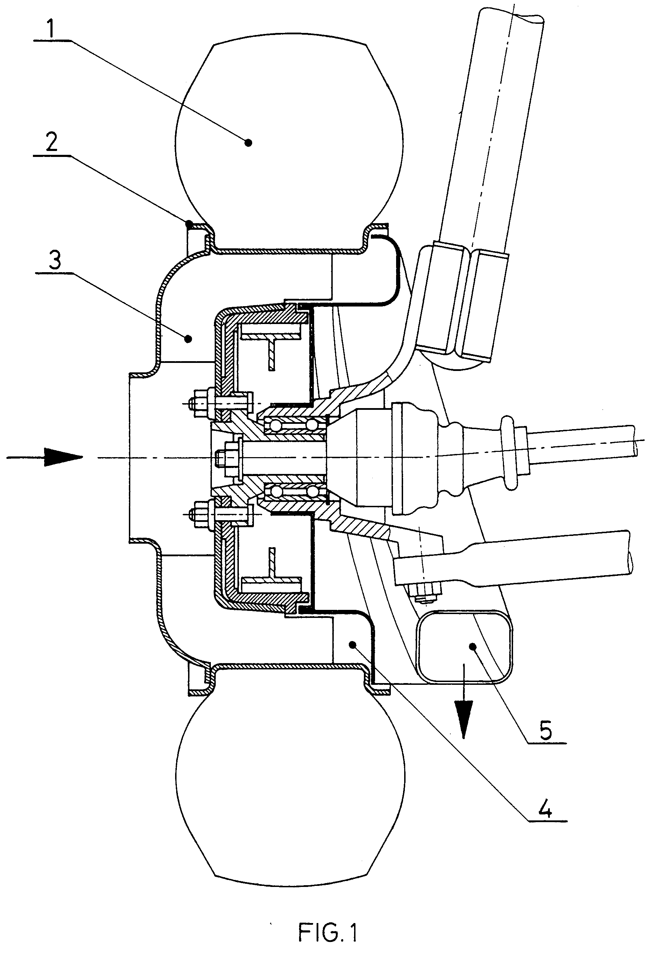

Chaque véhicule amphibie possède deux mécanismes distincts, l'un pour la propulsion des roues pour se déplacer sur terre, l'autre pour la propulsion nautique. Le dispositif selon l'invention permet de n'avoir à entraîner que les roues du véhicule (qui travaillent comme des pompes dès qu'elles se trouvent immergées dans l'eau).
Le dispositif comporte selon l'invention une roue dont la jante est munie d'aubes, qui tournent en même temps que la roue motricée. Les aubes produisent un écoulement du liquide, qui est dirigé vers l'entrée du canal de refoulement. L'ejection de l'eau de la tubulure de refoulement est orientée pour propulser le véhicule dans l'eau. Pour un bon fonctionnement du dispositif il est nécessaire de bloquer ou de commander le différentiel du véhicule. La figure 1 réprésente en coupe le dispositif selon l'invention.
Le plan du dispositif de propulsion nautique comporte: le pneu (1) avec sa jante (2). La jante (2) est munie d'aubes (3). Dans la zone où le liquide quitte les aubes (3), se trouve un canal hélicoïdal de refoulement (4), contigu et ouvert à ladite zone, suivi d'une tubulure de refoulement (5) (éventuellement terminée par une tuyère d'éjection) orientée à l'opposé au sens du déplacement souhaité. Le principe de la fixation de la jante, de la motorisation de la roue, du freinage etc. est identique à celle d'un véhicule terrestre ordinaire. La propulsion nautique se fait de la manière suivante:

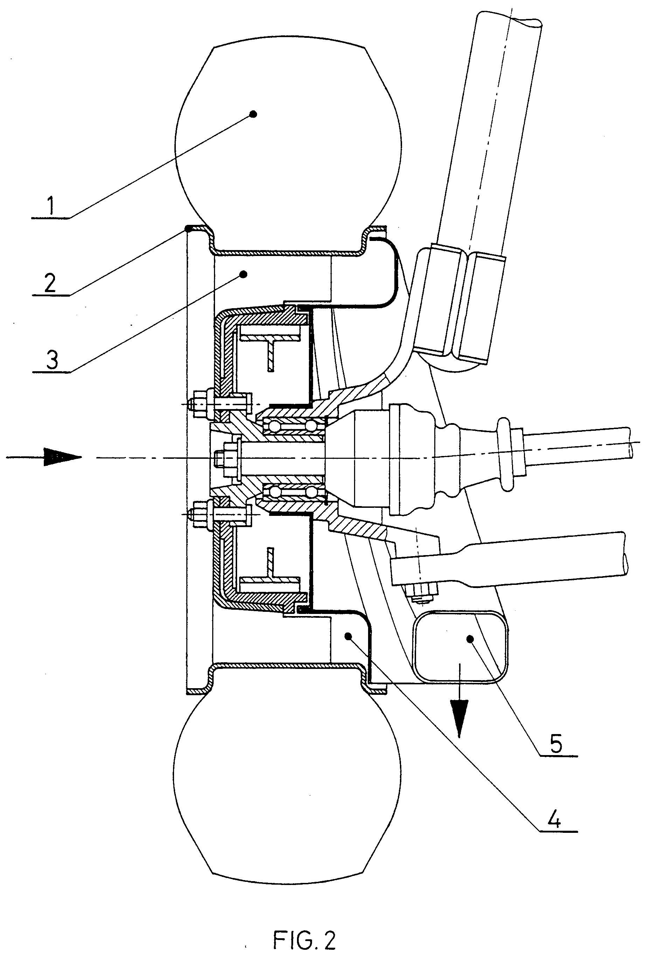

Les aubes (3) en tournant avec la jante (2) et le pneu (1) travaillent comme une pompe et accélèrent le liquide vers le canal de refoulement (4). Ensuite le liquide sort de la tubulure de refoulement (5) avec la vitesse ainsi acquise, propulsant le véhicule par la force de réaction. L'accélération du liquide peut se faire dans ladite pompe par le principe d'écoulement: axial, centrifuge ou hélico-centrifuge. La figure 1 montre le principe hélico-centrifuge, la figure 2 le principe axial.

Dans le cas d'un véhicule amphibie avec 4 roues motrices on obtient 4 groupes propulseurs. En tournant le volant on oriente les roues, donc la direction des jets d'eau qui sortent des tubulures de refoulement (5) des roues directrices, ce qui permet de diriger le véhicule amphibie sur l'eau sans qu'aucun autre dispositif soit nécessaire (gouvernail, spoiler ...). Pour avoir un bon fonctionnement des propulseurs selon l'invention il est nécessaire de bloquer ou de commander le différentiel. La commande du différentiel permet (facultativement) d'accroître la manoeuvrabilité du véhicule en virage. Le dispositif selon l'invention peut être utilisé comme un moyen de pompage en branchant des tuyaux d'évacuation sur le(s) tubulure(s) de refoulement (5), à condition que les roues soient immergées.

## Revendications

1. Dispositif de propulsion nautique d'un véhicule amphibie dont les jantes (2) des pneus (1) des roues motrices sont équipées d'aubes (3), qui tournent avec les roues et qui accélèrent le liquide vers l'entrée d'un moyen de refoulement, ce moyen de refoulement comporte une tuyère d'éjection orientée à l'opposé au sens du déplacement souhaité,
caractérisé par le fait que
chaque roue ainsi équipée, comporte comme moyen de refoulement, dans la zone où le liquide quitte les aubes (3), un canal de refoulement (4), contigu et ouvert à ladite zone, suivi d'une tubulure de refoulement (5) terminée par ladite tuyère d'éjection.

## Claims

1. Nautical propulsion device for an amphibious vehicle in which the rims (2) for the tyres (1) of the driving wheels are equipped with vanes (3), which turn with the wheels and which accelerate the liquid towards the inlet of a delivery means, this delivery means including an ejection nozzle orientated in the opposite direction to the desired direction of travel,
**characterized in that**
each wheel thus equipped includes, as a delivery means, in the region where the liquid leaves the vanes (3), a delivery channel (4) which is contiguous with and open towards the said region, followed by a delivery pipe (5) ending in the said ejection nozzle.

## Patentansprüche

1. Nautische Antriebseinrichtung eines Amphibienfahrzeuges, dessen angetriebene Räder Felgen beinhalten, die mit Schaufeln (3) ausgerüstet sind, die sich zusammen mit den Rädern drehen und die eine Flüssigkeit in den Einlauf der Auslaufeinrichtung beschleunigen. Diese Auslaufeinrichtung besteht aus einer Auslaufdüse, die entgegen die vorhergesehene Bewegungsrichtung gerichtet ist,
dadurch gekennzeichnet dass
jedes Rad, wie oben beschrieben ausgerüstet, in dem Bereich, wo die Flüssigkeit die Schaufeln (3) verlässt, einen Auslaufkanal (4) als Auslaufeinrichtung besitzt, der an diesem Bereich anliegt, zu ihm hin geöffnet ist und in ein Auslaufrohr (5) übergeht, das von der so genannten Auslaufdüse abgeschlossen wird.
